(19) Europäisches Patentamt
European Patent Office
Office européen des brevets

(11) EP 2 479 684 B1

(12) **EUROPEAN PATENT SPECIFICATION**

(45) Date of publication and mention
of the grant of the patent:
**25.09.2013 Bulletin 2013/39**

(51) Int Cl.:
**G06F 17/30** (2006.01)

(21) Application number: **11151663.9**

(22) Date of filing: **21.01.2011**

(54) **Method and evaluation server for evaluating a plurality of videos**

Verfahren und Beurteilungsserver zur Beurteilung mehrerer Videos

Procédé et serveur d'évaluation pour évaluer une pluralité de vidéos

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.07.2012 Bulletin 2012/30**

(73) Proprietor: **NTT DoCoMo, Inc.
Tokyo (JP)**

(72) Inventors:
• **Kellerer, Wolfgang
82256, Fürstenfeldbruck (DE)**
• **Munaretto, Daniele
80687, Munich (DE)**

• **Thakolsri, Srisakul
80689, Munich (DE)**
• **Steinbach, Eckehard
82140, Olching (DE)**
• **El Essaili, Ali
80798, Munich (DE)**

(74) Representative: **Betten & Resch
Theatinerstrasse 8
80333 München (DE)**

(56) References cited:
**WO-A1-2006/103151    WO-A1-2009/005744
GB-A- 2 456 129    US-A1- 2009 087 161
US-A1- 2009 148 124    US-A1- 2010 002 084
US-A1- 2010 214 419**

**Description**

**FIELD OF INVENTION**

The present invention relates to a method and an evaluation server for evaluating a plurality of videos.

The proposed method may e.g. be used for real-time video distribution of one event, which is captured by several video producers simultaneously, and it may be used to optimize resources from the video sources through the network to the sink (video server, portal, etc...).

**BACKGROUND OF THE INVENTION**

The number of mobile phones supporting higher video quality resolutions and providing enhanced capabilities is dramatically increasing. Nowadays, users make use of the advanced features in their mobile phones streaming daily life videos and sharing them in the network through video portals. In a soccer game or a live concert, users attending the event may share their live experience with others by capturing a video of the event in real-time (no archiving).

It is an object of the present invention to provide a method and an apparatus which make it possible to implement such a live video portal where users may upload and share with other users their videos which they are taking when attending an event.

An attempt to create such a portal is quite difficult. In principle it is easy to provide a server where videos may be uploaded by users attending an event and are then offered for viewing by other users. However, implementing such a system in a way that is really feasible and satisfactory to the users is not easy. For example there may be many users attending an event like a concert, and a very large number of video streams may be the result. It is difficult to upload them due to bandwidth restrictions, and furthermore it is difficult to offer them for download in a reasonable way so that the user can find what he is interested in. Enabling such an event-based live video portal is actually quite challenging.

This problem leads to related problems and questions, for example the question of how to allocate resources to the video streams of the portal. There exist approaches for optimizing resource allocation. These approaches typically are related to QoE-based cross-layer optimization in downlink, in which the network resources allocation is optimized based on the information abstracted from different layers. For example in S. Khan, S. Duhovnikov, E. Steinbach, and W. Kellerer, "MOS-based multiuser multiapplication cross-layer optimization for mobile multimedia communication," Advances in Multimedia, 2007, article ID 94918, method are proposed to take the information from application, network, MAC and physical layer into account. Based on the objective function set for the optimization problem, the network resources are allocated differently, for example, a network may want to achieve the maximum average user perceived quality of all users. B. Radunovic and J. Y. Le Boudec, "A unified framework for maxmin and min-max fairness with applications, " IEEE/ACM Trans. on Networking, vol. 15, no. 5, pp. 1073-1083, Oct. 2007, or US-Patent 5675576 disclose to allocating the network resources such that all users perceive a similar quality of service.

The resource allocation in uplink packet transmission is for example discussed in J. Huang, V. G. Subramanian, R. Agrawal, and R. Berry, "Joint scheduling and resource allocation in uplink OFDM systems for broadband wireless access network," IEEE journal on selected areas in Communications, Vol. 27, Issue 2, Feb. 2009, in which the scheduling and resource allocation algorithm jointly run.

Modelling the expected user perceived quality for video application is discussed in ITU-T Recommendation J. 144, "Objective perceptual video quality measurement techniques for digital cable television in the presence of a full reference," March 2004, or in Z. Wang, L. Lu, and A. C. Bovik, "Video Quality Assessment Based on Structural Distortion Measurement," IEEE Signal Processing: Image Communication, vol. 19, no. 1, pp. 121-132, Feb. 2004. These works use MOS as a measure of expected user perceived quality.

In T. C. Thang, Y. J. Jung, and M. M. Ro, "Semantic quality for content-aware video adaptation," Proc. IEEE Workshop on Multimedia Signal Processing (MMSP), pp. 41-44, Oct. 2005, Thang et al. propose an analytical framework to evaluate the video quality using the semantic entity in a video, rather than just the visual clarity and motion smoothness as a measure. The purpose of application modelling is to know how the user perceived quality changes with respect to network/application performance metric (e.g. data rate, packet loss, PSNR).

US 2009/087161 A1 describes example embodiments of a media synchronization system and method for synthesizing a presentation of a multimedia event. In some example embodiments, the media synchronization system includes a media ingestion module to access a plurality of media clips received from a plurality of client devices, a media analysis module to determine a temporal relation between a first media clip from the plurality of media clips and a second media clip from the plurality of media clips, and a content creation module to align the first media clip and the second media clip based on the temporal relation, and to combine the first media clip and the second media clip to generate the presentation.

US 2009/148124 A1 discloses methods and systems for processing multimedia content cap-tured from a plurality of locations via one or more capturing devices include obtaining multimedia content from one or more capturing devices. The capturing devices identify a type of content being captured and/or location of capture. An interest type for multimedia content is obtained from a consuming user. The multimedia content from the capturing devices are searched based on the interest type of the consuming user. A subset of the multimedia content conforming to the interest type is presented in substantial real-time at the receiving devices of the consuming users. Feedback regarding the presented multimedia content is obtained from consuming users and communicated to the capturing devices in substantial real-time so as to influence future capture of multimedia content. The methods also include receiving a request for recording a live event wherein the request provides one or more recording preferences including one or more requester preferences for recording the live event. The request is dynamically matched to one or more generating users who have expressed intentions for recording the live event. The generating users are associated with one or more capturing devices that are configured to record the live event based on the recording preferences of the request. The request is then forwarded to the matched one or more generating users for recording the live event. User interactions at the recordings are monitored and fed back to the generating users for further

WO 2006/103151 A1 The invention concerns method to distinguish between streams received by an access point from a distribution network and transmitted to stations and a way to give better priority to some of them towards others. In a system where streams are transmitted with a level of priority corresponding to there type, it adds a selection criterion to determine priority between streams of the same type. The invention also concerns an access point implementing the method.

None of the prior art, however, addresses the problem in which the mobile network resources allocation is optimized to achieve an optimal live video distribution of an event captured by multiple video producers.

This is not an easy task given the number and the large variety of possible channels that need to have allocated resources, e.g. by assigning them a "class" or a priority or a "rank".

In the extreme case, an operator might deny the resources to users belonging to the lowest user class (pricing policy), thus allowing the video sharing to only "premium" subscribers. Furthermore, in case of even more severe resource constraints, only the best media contributions, in terms of video quality and semantic information provided, will be pushed to the video server.

## SUMMARY OF THE INVENTION

The present invention is defined in the independent claims. The dependent claims define embodiments of the invention.

According to one embodiment there is provided evaluation server for evaluating a plurality of videos, said evaluation server comprising:

a module for identifying among a plurality of videos those videos which capture the same event by determining whether the video has been taken from a location lying at or within a certain geographic area and by determining whether the video has been taken at or within a certain time;

a module for automatically obtaining for the videos which have been identified as being taken from the same event one or more scene-based relevance parameters, each scene-based relevance parameter expressing by a numeric value the relevance of the content of the video for a user on a scale ranging from a minimum relevance parameter value to a maximum relevance parameter value;

a module for obtaining for the videos which have been identified as being taken from the same event a priority value based on said one or more relevance parameter values, said priority value expressing for said videos which have been identified as being taken from the same event the priority with which a certain processing is to be carried our for each of said videos, wherein said processing comprises one or more of the following

Assigning a network resource to each of said videos for uploading each of said videos to a server;
offering said plurality of videos for download or for viewing to a user in accordance with said priority values

This enables the implementation of a real-time event-based video portal which can handle a large number of videos which may be taken from different events but where several of the multiple videos are taken from the same event and handled as belonging to the same event.

According to one embodiment said videos are prioritized according to said priority values in a video portal, and said priority values are calculated based on the following:

calculating for each video a weighted sum of said relevance parameters to obtain thereby the priority value for each of said videos, wherein the relevance parameters include one or more relevance parameters based on sensed information sensed by a sensor of a mobile device such as the distance from the event or the viewing angle, and further one or more scene based relevance parameters which are based on the video content itself such as quality indicators like PSNR, resolution or brightness;
prioritizing the plurality of videos in said video portal according to the calculated priority values such that a video having a higher priority value is prioritized higher than a video having a lower priority value.

The sensing of the relevance parameters by sensors and calculating based thereon a priority value enables an automatic processing according to the priority of the videos.

According to one embodiment said videos are prioritized according to said priority values for allocating network resources, and said resource allocation based on said calculated priority values is carried out using the following steps:

calculating for each video a weighted sum of said relevance parameters to obtain thereby the priority value for each of said videos, wherein the relevance parameters include one or more relevance parameters based on sensed information sensed by a sensor of a mobile device such as the distance from the event or the viewing angle, and further one or more scene based relevance parameters which are based on the video content itself such as quality indicators like PSNR, resolution or brightness;
allocating bandwidth to the video which has the maximum priority value and which has not yet been assigned bandwidth; and
repeating said allocating step until all bandwidth which can be allocated has been assigned to said plurality of videos.

This enables an algorithm for prioritized processing automatically based on sensed relevance parameter values.

According to one embodiment said one or more scene-based relevance parameters are obtained based one or more of the following:

Context information which is sensed by one or more suitable sensors of a mobile device of a user with which the video is recorded, said context information being transmitted together with said video to said evaluation server, wherein said context information comprises one or more of the following:

The time at which said video is recorded;
the location information at which said video is recorded;
the two- or three-dimensional location and/or inclination of the mobile device which records said video.

These are advantageous examples of relevance parameters.

According to one embodiment the evaluation server further comprises:

a module for calculating based on the plurality of scene-based relevance parameters obtained for each of said plurality of videos a combined scene-based relevance parameter as priority value for each of said videos;
a module for carrying out said processing in accordance with said combined priority values.

The combined scene-based relevance parameter makes it possible to take multiple relevance parameters into account.

According to one embodiment said one or more scene-based relevance parameters are obtained based on context information which express the geographic or semantic context of said video

This enables the determination of the priority value based on parameters which are particularly useful for judging the relevance, namely location and semantic context.

According to one embodiment said scene-based relevance parameter reflects one or more of the following:

The viewing angle of the scene;
the distance from which the scene recorded by the camera;
the size of one or more faces recorded on the video;
the brightness of the video;
the resolution;
the PSNR;
the popularity of the video.

These are examples of relevance parameters.

According to one embodiment the evaluation server further comprises:

a module for receiving said plurality of videos in real-time;
a module for repeatedly obtaining said scene-based relevance parameters to obtain updated priority values of said videos;
a module for rearranging the priority of said processing based on the updated priority values.

This enables the adaptation to a changing environment.

According to one embodiment said plurality of videos are generated recording the same event or the same scene by the mobile devices of a plurality of users and said videos are uploaded by said users to said evaluation server for being distributed to other users through a video-portal.

This enables the usage of the videos to implement a video portal.

According to one embodiment the evaluation server comprises:

A recognizing module for automatically recognizing those videos which are recording the same event or the same scene;
a module for grouping said plurality of videos according to the respective scenes or events which they are recording;
a module for carrying out said prioritized processing separately for each group of videos.

This enables the automatic categorization and grouping of videos uploaded by the users.

According to one embodiment the evaluation comprises:

A classifying module which stores information about how a certain automatically obtained context information or semantic information is to be translated into a certain numeric scene-based relevance parameter, obtains said context information and refers to said stored information to obtain said scene-based relevance parameter.

This enables the translation of context information into relevance parameters which then can - according to some mechanism ⸺ be transformed into a priority value.

According to one embodiment said classifying module stores one or more of the following: How to translate a certain location into a certain scene-based relevance parameter;
how to translate a certain distance from the recorded event into a certain scene-based relevance parameter;
how to translate a certain viewing angle of the recorded event into a certain scene-based relevance parameter;
how to translate a certain brightness of the recorded event into a certain scene-based relevance parameter.

This enables the translation of context information into relevance parameters which then can ⸺ according to some mechanism ⸺ be transformed into a priority value.

According to one embodiment there is provided a method for evaluating a plurality of videos, said method comprising:

automatically obtaining for each video one or more scene-based relevance parameters, each scene-based relevance parameter expressing by a numeric value the relevance of the semantic content of the video for a user on a scale ranging from a minimum relevance parameter value to a maximum relevance parameter value;
obtaining for each of said plurality of videos a priority value based on said one or more relevance parameter values, said priority value expressing for each of said plurality of videos the priority with which a certain processing is to be carried our for each of said videos, wherein said processing comprises one or more of the following:

assigning a network resource to each of said videos for uploading each of said videos to a server;
assigning the network resources to each of said videos for downloading each of said videos from a server;
offering said plurality of videos for download or for viewing to a user in accordance with said priority values.

This enables the implementation of a method according to an embodiment of the invention.

According to one embodiment there is a computer program comprising computer program code which when being executed by a computer enables said computer to carry out a method according one of the embodiments of the invention.

## DESCRIPTION OF THE DRAWINGS

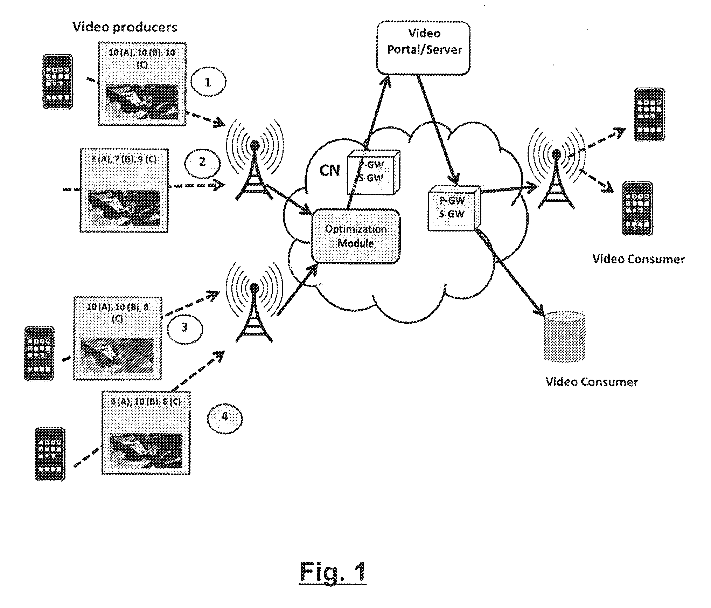

Fig. 1 schematically illustrates an embodiment of the invention.

## DETAILED DESCRIPTION

In the following there will be described embodiments for the distribution of live video contents generated by multiple video sources about the same event (e.g. mobile users attending a concert, football game, etc...). The users may use cameras with different capabilities (camera resolution, video quality, etc..) to capture the event and streaming the event from different angles.

First of all one basic embodiment will be explained. In this embodiment there is an evaluation server (e.g. in a network of a mobile operator) which is receiving uploaded videos. There may be videos uploaded from quite different locations at different times which may correspond to different events like concerts, sports events, or any other public events.

The server according to one embodiment comprises a module for identifying those videos among the uploaded ones which capture the same event. This can for example be achieved by evaluating the geographic information which is sent together with the uploaded video and which may be derived from a GPS sensor of the mobile phone with which the video is taken. Additionally the time at which the video is taken can be taken into account to judge whether it is capturing the same event.

For example, there may be predefined geographic areas like the geographic boundaries of the location of a soccer stadium. All the uploaded videos where the geographic information corresponds to the geographic area of the soccer stadium and where the time of capturing corresponds to the time of a soccer match may then be judged as showing the same event, namely the soccer match.

In this manner the module can identify those videos showing the same event.

Then the server may further comprise a module for obtaining one or more scene-based relevance parameters. Each scene-based relevance parameter expresses by a numeric value the relevance of the content (the "semantic content") of the video for a user on a scale ranging form a minimum relevance parameter value (which may be zero or even negative) to a maximum relevance parameter value.

The relevance parameters may e.g. parameters like the "distance from the scene" or "distance from the stage", the "viewing angle", or any other parameters which reflect the content of the video in a way which expresses the relevance of the content for the user in view of the specific parameter. There may be a "best viewing angle" which will correspond to the maximum relevance parameter, and a "worst" viewing angle" corresponding to the minimum relevance parameter.

The correspondence between viewing angle and the relevance parameter may be predefined for a certain location such as a soccer stadium or a concert hall.

There may be obtained one or more relevance parameters by the module.

Then there may be provided a module which obtains for the videos showing the same event a priority value based on the relevance parameter(s). If there are more than one relevance parameters they may be combined by some mathematical calculation method to obtain a combined relevance parameter, if there is only one relevance parameter it may directly correspond to the priority value.

The priority value expresses for its corresponding video the priority with which a certain processing is to be carried out for the video, and the processing may thereby be the assigning of a network resource (such as bandwidth) to the video for uploading it, or the processing may be the offering of the video for download of for viewing by a user.

For the plurality of uploaded videos the processing (resource allocation, offering for viewing or download) is carried out in accordance with the priority values assigned to the videos. Higher prioritized videos may have allocated more network resources for upload, they may be higher prioritized for offering for download or viewing by a user (e.g. by being shown larger or earlier or at a more prominent place in the portal for download).

In this way there can be implemented a portal for event-based video handling (upload and download) which can deal with the challenges of a potential large number of videos and the implications and problems which this creates for the resource allocation and for the user interface which offers the videos for viewing and for download.

According to one embodiment the mobile phones or devices used for capturing the videos are equipped with one or more sensor used for sensing the relevance parameters. Distance or viewing angle may be sensed using GPS sensor or orientation/rotation sensors. For example a soccer stadium or an event location may be divided into regions which have assigned corresponding relevance parameters when the video is captured from this region. Similarly, certain viewing angles or ranges may have assigned corresponding relevance parameters. The relevance parameters may also include scene based relevance parameters like PSNR, resolution or brightness. According to one embodiment the multiple relevance parameters are then combined by calculating their weighted sum to obtain the priority value for a video which then is used for prioritization with respect to the certain processing such as resource allocation or offering for viewing or download.

According to one embodiment the prioritized processing is the allocation of bandwidth, which is done as follows in this embodiment.

After having calculated the priority values for the videos, first there is allocated bandwidth to the video which has the highest priority value and still has not been allocated any bandwidth. Then the mechanism proceeds with allocating bandwidth to the video having the next highest priority, then again the one with the next highest priority, and so on. This process is then repeated until all bandwidth which is available for allocation has been allocated.

According to one embodiment the scene-based relevance parameters are based on context information which are obtained by one or more sensors of the mobile device by which the video is captured. The context information is then transmitted together with the video, and it is used to obtain the scene-based relevance parameter. This may e.g. be the time at which the video is recorded (e.g. a break is less relevant compared to a moment of a soccer match when one team scores). Another example for context information is the location of the mobile device, still another example is the orientation of the mobile device which can be used to determine the viewing angle.

According to one embodiment the priority value is then obtained by calculating a combined scene-based relevance parameter value as priority value based on the individual scene-based relevance parameter values. This priority value is then used for prioritizing the processing.

The scene-based relevance parameters according to one embodiment express or reflect the geographic or the semantic context of a video. The geographic context may be the location, the semantic context may be the viewing angle or the content of the stream. An example for the content could e. g. be whether there are faces which can be recognized and the size of such faces in relation to the screen. For a stream showing large faces the relevance might e.g. be higher than for video streams with small faces or no faces at all.

As mentioned already, there may be taken into account a plurality of scene-based relevance parameters which may then be combined to obtain a combined value. Examples for the relevance parameters are the viewing angle, the distance, the size of faces on the video, the resolution or the PSNR.

According to one embodiment the scene-based relevance parameters are repeatedly sent and repeatedly evaluated to obtain repeatedly a (new) priority value for each video. In this way changes in the "sample" of available videos can be taken into account, e.g. if a video stream now has become more relevant because the user has moved more towards the stage from his previous place, then the priority of this view may increase. As a consequence, in a video portal it may be offered for viewing on a more prominent place at a higher rank, e.g. more on top of the list of available videos. Similarly the resource allocation may be adapted to the new priority value.

The repeated evaluation may e.g. be carried out with a certain predetermined frequency.

The evaluation server according to one embodiment may be part of a network, and it may receive the uploaded videos for determining their priority. According to one other embodiment the videos are uploaded to a certain server, and the evaluation server is a separate entity and receives only the necessary relevance parameters of their corresponding context information and then determines the priority value for each video and sends it back to the server where the uploaded videos are stored and processed. This server may be part of a video portal where the videos can be uploaded and are then offered for download. For that purpose the portal may provide a user interface where the videos are sorted in accordance with the events which they are showing. The videos of the same event are then displayed for to be offered for download (e.g. by showing their icon) such that the display and offering reflects their priority, e.g. by showing the higher prioritized ones larger and/or at a more prominent position than the less prioritized ones.

The portal may offer groups of videos corresponding to the different events, and for the videos of each event once the event has been selected the offering is done according to their priority. The grouping may be done fully automatically based on the module for recognizing that the video belongs to a certain event (such as a soccer game). For those videos for which no group (or event) can be identified, there may be a group category "others" into which the video is then categorized.

In this way a fully automated event-based video portal may be created which categorizes the uploaded videos and then processes them according to their priority, e.g. for offering them for download or viewing.

According to one embodiment the server comprises a classifying module which is capable of receiving the context information and translates it into a scene-based relevance parameter. This module may e.g. store information about the correspondence between a certain context information value and a corresponding relevance parameter. In case of the context information being geographic location this module may e.g. store information about which location in a stadium or a concert hall corresponds to which relevance parameter. By performing a lookup then the relevance parameter may be determined. In a similar way also other context information such as "viewing angle" or PSNR" may be classified by assigning a certain context information value a corresponding relevance parameter and storing the correspondence in the classifying module so that it can be looked up.

In the following further embodiments will be described.

According to one embodiment there is provided a method to optimize the resource allocation for the upstream, i.e. there are selected and prioritized those videos with the best combination of video characteristics (quality metrics such as camera resolution and relevance of the scene, i.e. semantic content) provided simultaneously by video-stream producers of the same event to be transmitted through the network to a video portal or a video server. From here videos are offered to the video consumers in real-time. Hence, an operator can control network resources by avoiding an increase of undesirable push-based network traffic, while still offering the best video contents for the same event to the video-stream consumers.

The allocation procedure according to one embodiment takes into account the video content based on its "relevance" for the user. The content, or one may also say the "semantic content" (because what matters is what the content "means" for the user") is taken into account based on its relevance for the user. According to one embodiment additional other properties of the video stream may be taken into account, such as quality, e.g., resolution. Another property which may be taken into account can be the "importance" of an event being captured, (e.g., the popularity of the whole event or subsets of recordings, this may be measured based on the "number of clicks" on the event or on a certain stream). Other examples for properties which are taken into account may e.g. be the video utility function (e.g., dynamic/static video), and the channel conditions for each video producer.

Based on the properties which are taken into account the method according to one embodiment determines an optimal network resource allocation for the stream that maximizes the overall quality perceived by the users (video consumers) watching in real-time the live event.

In one embodiment only the best video(s), i.e. the best combinations of video quality and content relevance (relevance of the semantic information of the video for the user) provided by the real-time streaming, will be streamed to the video consumers. Thus, the other videos may e.g. be discarded from the upstream or reduced to a minimum resource consumption compared to the selected streams, which means that applying the optimization algorithm would reduce upstream traffic required for sharing such live video contents in the community in real-time.

According to one embodiment the videos or video streams process in the portal are assigned a priority value or a "rank".

In the extreme case, an operator might deny the resources to users belonging to the lowest user class (pricing policy), thus allowing the video sharing to only "premium" subscribers. Furthermore, in case of even more severe resource constraints, only the best media contributions, in terms of video quality and semantic information provided, will be pushed to the video server.

The user perceived quality of a video-stream to some extent depends on the mobile terminal and network capabilities, but according to one embodiment there is used as a basis for the priority value determination the content of the video or the "relevance" of the content for the user. This may be called the "semantic information" or the "semantic content" of the video. The "semantic content" should be understood as the "meaning" which the content of the video has for the user in terms of its relevance. Such "semantic information" or "semantic content" may e. g. be the angle from where the video is captured. Video-stream consumers might prefer the point of view of a video producer close to the action (e.g., football game) or in front of the main player involved in such action to clearly distinguish the details the consumer is interested in. The content of such a video has a higher relevance for the user than one from a different viewing angle, which means the "semantic content" or "semantic information" corresponding to the viewing angle has the "meaning" for the user that it is more relevant.

The combination of the video quality provided by the use of a mobile phone with enhanced capabilities and the semantic information carried alongside by the shot video in one embodiment is used to rank a video among all videos streamed for the same event to thereby take into account the relevance of the videos. Moreover, optimizing the network resource allocation for multiple video producers sharing the generated content of the same event can also be carried out according to one embodiment by a network operator to efficiently allocate the network resources.

The embodiments of the present invention are capable of achieving a number of advantageous effects.

One example consists of more efficient resource allocation for the distribution of live video contents generated from the same event (e.g. by multiple attendees), while guaranteeing the best combination of video quality metrics, including relevance of the scene (semantic content). From an operator point of view, this leads to avoid undesirable network traffic increase, while either at least preserving or enhancing the customer satisfaction.

Furthermore embodiments of the invention enable the following:

- Fast selection (important for real-time applications) of video-streams to be offered by a portal/server for a certain event;
- Adaptive resource allocation (push-based traffic);
- Avoidance of overloaded buffering and processing at the video portal or in the network.

Before discussing in the following an embodiment of a pseudo-algorithm that solves the optimization problem with respect to the network resource allocation for the upstream, there will be provided an explanation of a more simple embodiment in connection with Fig. 1 to further clarify how an embodiment of the invention works in practice.

In Figure 1 there is drawn on the left side a number of video producers (which is not to be understood as being limited to mobile terminal, but can be any device/node generating video contents to be pushed in real-time into the network), i.e. attendees of the same event (such as a sports event like a soccer match) but providing video-streams with different combinations of video quality metrics (corresponding to relevance parameters). For the sake of simplicity, there are assumed 3 generic video metrics, A, B and C, and there is given a mark to each metric from the interval [1, 10], where 1 is the lowest and 10 is the highest mark for a given metric (or relevance parameter).

A video content can be represented by a set of parameters such as brightness, luminance, contrast, viewing angle (which may be derived from a combination of spatial coverage information via GPS, which gives also the distance from the event, and facial recognition software or data from orientation sensors which can be used to determine the line of sight of the camera)), picture motion, steadiness, camera resolution, frame rate and background noise. For the sake of simplicity, in this embodiment there are consider only the subset of parameters that can be translated into a machine processable figure/representation, in other words parameters where the "relevance value" or metric value" can be automatically be obtained. Thus, for instance, in the example in Figure 1, parameter A could be the distance from the scene, B the brightness of the video and C the background noise. These parameters can be easily and automatically be translated into "relevance values". Also for other parameters (like the viewing angle) this is possible, e.g. by using orientation sensors the data of which is then translated into a "viewing angle" and then into a relevance parameter. Here, however, only distance, brightness and background noise are considered in this example.

In case of bandwidth constraints when upstreaming, i.e. not all the video producers will be accepted by the base station, thus an optimization algorithm placed in a module in the network (e.g. in an evaluation server), e.g. close to the base station, performs the selection of the streams providing the best combination of video quality metrics (which means the stream which has the highest priority value).

In this embodiment, each video metric under consideration is weighted based on the users' expectation from a specific event. For instance, background noise is expected to be a main issue for users watching a concert, while for soccer games the relevance of the scene (angle, steadiness and distance) is more important. The mapping of "context information" into a corresponding "relevance parameter" therefore may depend on the event.

In the example provided in Figure 1, the base stations can only transmit 1 video-stream due to the bandwidth constraints; therefore the algorithm selects the best video producers, which are no. 1 (for the upper base station) and no. 3 at the bottom side. The videos selected by the optimization algorithm will be transmitted to the video portal/server. This is a centralized module where all the videos received from the base stations are available to be down-streamed by the video consumers.

The optimization algorithm, which may be placed in a module close to the base stations, in this embodiment has to take into account: (i) the bandwidth to be used for the up-streaming of the generated video contents; (ii) specific quality and semantic information of each video for the same event; (iii) the time-varying nature of the metrics, since it might happen that a video producer is lowered in the ranking and is replaced by another video producer with better "combined" mark or priority value; (iv) time-varying nature of the wireless channel quality for each video producer; (v) the importance of different events, i.e. quality and semantic information depend on the type of video content, thus the metrics preferably should be weighted and tuned accordingly, for each "event" under consideration.

Assuming the same weight for each metric (or relevance parameter) A, B, and C in this case, it can be seen that the priority value for stream 1 with metric value A=10, B= 10, and C= 10 is larger than for video stream 2 with metric value A=8, B= 7, and C= 9.

According to one embodiment, in case of over-provisioned resources, i.e. all video producers for the same event can push their videos into the network, and this number of video producers is very high, the optimization algorithm can be further used to reduce the set of available choices for the video consumers in the video portal, e.g. the only "premium" user class is allowed to upstream, thus helping the consumers for a fast selection (important for real-time applications).

In the following there will be described an example of an optimization algorithm according to one embodiment.

A video content can be represented by a set of parameters such as brightness, luminance, contrast, angle (given by a combination of spatial coverage information via GPS, which gives also the distance from the event, and facial recognition software or orientation sensors), picture motion, steadiness, camera resolution, frame rate and background noise. For the sake of simplicity, it is hereby considered again only the subset of parameters that can be translated into a machine processable figure/representation, such as brightness and distance for instance.

Based on the user's expectations from a certain event, one can draw an application utility function as the weighted sum of a list of (relevance) parameters (weight a for parameter A, weight *b* for parameter B, etc...). Assuming that one can extract the value of each parameter from a video stream i, which is sent from the terminal to the portal, in the optimization module in the network ($A_i$, $B_i$, etc...), one can write the following generic formula which solves the optimization problem:

$$i_{MAX\_U} = argmax_{i=1..N} (a*A_i + b*B_i + c*C_i + ...)$$

The weighted sum of a given video stream corresponds to its priority value, and the maximum priority value is $i_{MAX\_U}$ and should be found.

Moreover, one can take into account the required bandwidth for each up- stream, hence dealing with a possible trade- off between bandwidth saving and quality/ quantity gain.

A generic pseudo-algorithm, which takes into account bandwidth required for up-streaming the videos selected through our optimization procedure, is the following:

**Pseudo-algorithm**

{A, B, C, D, E};     *%list of parameters reflecting quality and semantic information*

{a, b, c, d, e};     *% weights for the parameters A, B, ...*

I = {1, 2, ..., N};     *% set of up-streams (or video producers)*

$BW_{TOT}$;     *% total bandwidth in uplink*

B = 0;     *% counter for bandwidth usage*

$i_{MAX-U}$     *% index of the video producer that maximizes the overall sum*

Based on {feedback or timestamp} do

While $(B < BW_{TOT})$ & $(I \neq 0)$

$\qquad i_{MAX\_U} = \text{argmax}_{i \in I}\ (a^*A_i + b^*B_i + c^*C_i + ...)$; *% find the video that maximizes the overall mark*

$\qquad$ If $(B + B_{uMAX}) < BW_{TOT}$

0)

$\qquad\qquad$ I = I – { $i_{MAX\_U}$ };
$\qquad\qquad$ Deliver $i_{MAX\_U}$;     *% allocate uplink resources for this producer*
$\qquad\qquad$ B = B + $B_{iMAX\_U}$;

$\qquad$ Else

$\qquad\qquad$ I = I – { $i_{MAX\_U}$ };

$\qquad$ End

End

The algorithm in each iteration finds the video that maximizes the priority value (the "mark" as calculated by the weighted combination of the metric values), assigns in each iteration a bandwidth $B_{uMAX}$ to this video stream, and increases the counter B which indicates the already allocated bandwidth by $B_{uMAX}$.
This procedure is then repeated as long as the allocated bandwidth is smaller than the total available bandwidth $BW_{TOT}$, if this limit is reached, the allocation ends.
This procedure in one embodiment is repeated at regular intervals in the time domain, to take into account the time-varying nature of the metrics (relevance parameters) involved, as well as the possibility that video producers either quit the event (either physically or, for instance, due to low battery level of the camera) or join it later.
It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a router, a server, a module acting in the network, or a mobile device such as a mobile phone, a smartphone, a PDA, or anything alike.

**Claims**

1. An evaluation server for evaluating a plurality of videos, said evaluation server comprising:

a module for identifying among a plurality of videos those videos which capture the same event by determining whether the video has been taken from a location lying at or within a certain geographic area and by determining whether the video has been taken at or within a certain time;

a module for automatically obtaining for the videos which have been identified as being taken from the same event one or more scene-based relevance parameters, each scene-based relevance parameter expressing by a numeric value the relevance of the semantic content of the video for a user on a scale ranging from a minimum relevance parameter value to a maximum relevance parameter value (A, B, C);

a module for obtaining for the videos which have been identified as being taken from the same event a priority value based on said one or more relevance parameter values, said priority value expressing for said videos which have been identified as being taken from the same event the priority with which a certain processing is to be carried our for each of said videos, wherein said processing comprises:

allocating a network resource such as bandwidth to each of said videos in accordance with the priority values assigned to said videos for unloading each of said videos to a server,

said evaluation server further comprising:

a module for receiving said plurality of videos in real-time;

a module for repeatedly obtaining said scene-based relevance parameters (A, B, C) to obtain updated priority values of said videos,

a module for rearranging the priority of said processing based on the updated priority values; wherein said videos are prioritized according to said priority values for allocating network resources and said resource allocation based on said calculated priority values is carried out using the following steps:

calculating for each video a weighted sum of said relevance parameters (A, B, C) to obtain thereby the priority value for each of said videos, wherein the relevance parameters (A, B, C) include one or more relevance parameters based on sensed information sensed by a sensor of a mobile device such as the distance from the event or the viewing angle, and further one or more scene based relevance parameters which are based on the video content itself such as quality indicators like PSNR, resolution or brightness;

allocating bandwidth to the video which has the maximum priority value and which has not yet been assigned bandwidth; and

repeating said allocating step until all bandwidth which can be allocated has been assigned to said plurality of videos.

2. The evaluation server of claim 1, wherein wherein said videos are prioritized according to said priority values in a video portal, and said priority values are calculated based on the following:

calculating for each video a weighted sum of said relevance parameters to obtain thereby the priority value for each of said videos, wherein the relevance parameters include one or more relevance parameters based on sensed information sensed by a sensor of a mobile device such as the distance from the event or the viewing angle, and further one or more scene based relevance parameters which are based on the video content itself such as quality indicators like PSNR, resolution or brightness;

prioritizing the plurality of videos in said video portal according to the calculated priority values such that a video having a higher priority value is prioritized higher than a video having a lower priority value

3. The evaluation server of one of the preceding claims, wherein said one or more scene-based relevance parameters are obtained based one or more of the following:

Context information which is sensed by one or more suitable sensors of a mobile device of a user with which the video is recorded, said context information being transmitted together with said video to said evaluation server, wherein said context information comprises one or more of the following:

The time at which said video is recorded;

the location information at which said video is recorded;
the two- or three-dimensional location and/or inclination of the mobile device which records said video

4. The evaluation server of one of the preceding claims, further comprising:

a module for calculating based on the plurality of scene-based relevance parameters obtained for each of said plurality of videos a combined scene-based relevance parameter as priority value for each of said videos;
a module for carrying out said processing in accordance with said combined priority values.

5. The evaluation server of one of the preceding claims, wherein
said one or more scene-based relevance parameters are obtained based on context information which express the geographic or semantic context of said video

6. The evaluation server of one of the preceding claims, wherein said scene-based relevance parameter reflects one or more of the following:

The viewing angle of the scene;
the distance from which the scene recorded by the camera;
the size of one or more faces recorded on the video;
the brightness of the video;
the resolution;
the PSNR;
the popularity of the video.

7. The evaluation server of one of the preceding claims, wherein said plurality of videos generated recording the same event or the same scene by the mobile devices by a plurality of users and said videos are uploaded by said users to said evaluation server for being distributed to other users through a video-portal.

8. The evaluation server of one of the preceding claims, comprising:

A recognizing module for automatically recognizing those videos which are recording the same event or the same scene;
a module for grouping said plurality of videos according to the respective scenes or events which they are recording;
a module for carrying out said prioritized processing separately for each group of videos

9. The evaluation server of one of the preceding claims, comprising:

A classifying module which stores information about how a certain automatically obtained context information or semantic information is to be translated into a certain numeric scene-based relevance parameter, obtains said context information and refers to said stored information to obtain said scene-based relevance parameter.

10. The evaluation server of one of the preceding claims, wherein said classifying module stores one or more of the following.

How to translate a certain location into a certain scene-based relevance parameter;
how to translate a certain distance from the recorded event into a certain scene-based relevance parameter;
how to translate a certain viewing angle of the recorded event into a certain scene-based relevance parameter,
how to translate a certain brightness of the recorded event into a certain scene-based relevance parameter

11. A method for evaluating a plurality of videos, said method comprising:

identifying among a plurality of videos those videos which capture the same event by determining whether the video has been taken from a location lying at or within a certain geographic area and by determining whether the video has been taken at or within a certain time;
automatically obtaining for each video one or more scene-based relevance parameters, each scene-based relevance parameter expressing by a numeric value the relevance of the semantic content of the video for a user on a scale ranging from a minimum relevance parameter value to a maximum relevance parameter value (A, B, C);

obtaining for each of said plurality of videos a priority value based on said one or more relevance parameter values, said priority value expressing for each of said plurality of videos the prionty with which a certain processing is to be carried our for each of said videos, wherein said processing comprises:

allocating a network resource (such as bandwidth) to each of said videos for uploading each of said videos in accordance with the priority values assigned to said videos to a server;
wherein said method further comprises:

receiving said plurality of videos in real-time;
repeatedly obtaining said scene-based relevance parameters (A, B, C) to obtain updated priority values of said videos;
rearranging the priority of said processing based on the updated priority values;

wherein said method further compnses prioritizing said videos according to said prionty values for allocating network resources and allocating resources based on said calculated priority values using the following steps:

calculating for each video a weighted sum of said relevance parameters (A, B, C) to obtain thereby the prionty value for each of said videos, wherein the relevance parameters (A, B, C) include one or more relevance parameters based on sensed information sensed by a sensor of a mobile device such as the distance from the event or the viewing angle, and further one or more scene based relevance parameters which are based on the video content itself such as quality indicators like PSNR, resolution or brightness;
allocating bandwidth to the video which has the maximum prionty value and which has not yet been assigned bandwidth; and
repeating said allocating step until all bandwidth which can be allocated has been assigned to said plurality of videos.

12. The method of claim 11, wherein
said videos are prioritized according to said priority values in a video portal, and said priority values are calculated based on the following:

calculating for each video a weighted sum of said relevance parameters to obtain thereby the priority value for each of said videos, wherein the relevance parameters include one or more relevance parameters based on sensed information sensed by a sensor of a mobile device such as the distance from the event or the viewing angle, and further one or more scene based relevance information such as quality indicators like PSNR, resolution or brightness,
prioritizing the plurality of videos in said video portal according to the calculated priority values such that a video having a higher priority value is prioritized higher than a video having a lower priority value.

13. A computer program comprising computer program code which when being executed by a computer enables said computer to carry out a method according to one of claims 11 to 12

**Patentansprüche**

1. Ein Evaluierungsserver zum Evaluieren einer Mehrzahl von Videos, wobei der Evaluierungsserver aufweist:

ein Modul zum Identifizieren einer Mehrzahl von denjenigen Videos, welche das gleiche Ereignis aufnehmen, durch Ermitteln, ob das Video von einem Ort aufgenommen wurde, der an oder innerhalb eines bestimmten geographischen Bereichs liegt und durch Ermitteln, ob das Video zu einer oder innerhalb einer bestimmten Zeit aufgenommen wurde;
ein Modul zum automatischen Erhalten von einem oder mehreren szenenbasierten Relevanzparametern für diejenigen Videos, die als vom selben Ereignis aufgenommen identifiziert wurden, wobei jeder szenenbasierte Relevanzparameter durch einen numerischen Wert die Relevanz des semantischen Inhalts des Videos für einen Benutzer auf einer Skala ausdrückt, die von einem minimalen Relevanzparameterwert bis zu einem maximalen Relevanzparameterwert (A, B, C) reicht;
ein Modul, um für diejenigen Videos, die als vom selben Ereignis aufgenommen identifiziert wurden, einen Prioritätswert basierend auf dem einen oder mehreren Relevanzparameterwerten zu erhalten, wobei der Prioritätswert für Videos, die als vom selben Ereignis aufgenommen identifiziert wurden, die Priorität ausdrückt, mit der eine bestimmte Verarbeitung für jedes der Videos ausgeführt werden soll, wobei die Verarbeitung aufweist:

Zuweisen einer Netzwerkressource wie etwa der Bandbreite zu jedem der Videos in Übereinstimmung mit den Prioritätswerten, die den Videos zugewiesen wurde, zum Hochladen jedes der Videos zu einem Server;

wobei der Evaluierungsserver ferner aufweist:

ein Modul zum empfangen der Mehrzahl von Videos in Echtzeit;
ein Modul zum wiederholten Erhalten der szenenbasierten Relevanzparameter (A, B, C), um upgedatete Prioritätswerte der Videos zu erhalten;
ein Modul zum erneuten Anordnen der Priorität der Verarbeitung basierend auf den upgedateten Prioritätswerten;
wobei die Videos gemäß den Prioritätswerten zum Zuweisen von Netzwerkressourcen priorisiert werden und die Ressourcenzuweisung basierend auf den berechneten Prioritätswerten durchgeführt wird unter Verwendung der folgenden Schritte:

Berechnen, für jedes Video, einer gewichteten Summe der Relevanzparameter (A, B, C), um dadurch den Prioritätswert für jedes der Videos zu erhalten, wobei die Relevanzparameter (A, B, C) einen oder mehrere Relevanzparameter einschließen, die basieren auf gemessenen Informationen, die gemessen werden durch einen Sensor eines mobilen Geräts, wie etwa die Entfernung von dem Ereignis oder der Sichtwinkel, und ferner einen oder mehrere szenenbasierte Relevanzparameter, die basieren auf dem Videoinhalt selbst, wie etwa Qualitätsindikatoren wie PSNR, Auflösung oder Helligkeit;
Zuweisen von Bandbreite zu demjenigen Video, das den maximalen Prioritätswert hat und dem noch keine Bandbreite zugewiesen wurde; und Wiederholen des Zuweisungsschritts bis alle Bandbreite, die zugewiesen werden kann, der Mehrzahl von Videos zugewiesen wurde.

2. Der Evaluierungsserver nach Anspruch eins, wobei
die Videos gemäß den Prioritätswerten in einem Videoportal priorisiert werden, und die Prioritätswerte basierend auf folgendem berechnet werden:

Berechnen, für jedes Video, einer gewichteten Summe der Relevanzparameter, um dadurch den Prioritätswert für jedes der Videos zu erhalten, wobei die Relevanzparameter einen oder mehrere Relevanzparameter einschließen, die basieren auf gemessenen Informationen, die gemessen werden durch einen Sensor eines mobilen Geräts, wie etwa die Entfernung von dem Ereignis oder der Sichtwinkel, und ferner einen oder mehrere szenenbasierte Relevanzparameter, die basieren auf dem Videoinhalt selbst, wie etwa Qualitätsindikatoren wie PSNR, Auflösung oder Helligkeit;
Priorisieren der Mehrzahl von Videos in dem Videoportal gemäß den berechneten Prioritätswerten, so dass ein Video mit einem höheren Prioritätswert höher priorisiert wird als ein Video mit einem niedrigeren Prioritätswert.

3. Der Evaluierungsserver nach einem der vorhergehenden Ansprüche, wobei die ein oder mehreren szenenbasierten Relevanzparameter erhalten werden basierend auf einem oder mehreren der Folgenden:

Kontextinformationen, die ermittelt werden durch ein oder mehrere geeignete Sensoren eines mobilen Geräts eines Benutzers, mit dem das Video aufgenommen wird, wobei die Kontextinformationen zusammen mit dem Video an den Evaluierungsserver übertragen werden, wobei die Kontextinformationen ein oder mehrere der folgenden aufweisen:

die Zeit, zu der das Video aufgenommen wurde;
die Ortsinformationen, an denen das Video aufgenommen wurde;
der 2-oder 3-dimensionale Ort und/oder die Neigung des mobilen Geräts,
das das Video aufnimmt.

4. Der Evaluierungsserver nach einem der vorhergehenden Ansprüche, ferner aufweisend:

Ein Modul zum Berechnen eines kombinierten szenenbasierten Relevanzparameters als Prioritätswert für jedes der Videos basierend auf der Mehrzahl von szenenbasierten Relevanzparametern, die für jedes der Mehrzahl von Videos erhalten wurden;

Ein Modul zum Ausführen der Verarbeitung in Übereinstimmung mit den kombinierten Prioritätswerten.

5. Der Evaluierungsserver nach einem der vorhergehenden Ansprüche, wobei der ein oder mehrere szenenbasierten Relevanzparameter erhalten werden basierend auf Kontextinformationen, die den geographischen oder semantischen Kontext des Videos ausdrücken.

6. Der Evaluierungsserver nach einem der vorhergehenden Ansprüche, wobei der szenenbasierten Relevanzparameter eines oder mehrere von folgendem ausdrückt:

Der Sichtwinkel der Szene;
der Abstand von der Szene, die durch die Kamera aufgenommen wurde;
die Größe von einem oder mehreren Gesichtern, die auf dem Video aufgenommen wurden;
die Helligkeit des Videos;
die Auflösung;
die PSNR;
die Popularität des Videos.

7. Der Evaluierungsserver nach einem der vorhergehenden Ansprüche, wobei die Mehrzahl von Videos, erzeugt wurden durch Aufnahme des selben Ereignisses oder der selben Szene durch die mobilen Geräte durch eine Mehrzahl von Benutzern, und wobei die Videos hochgeladen werden durch die Benutzer an den Evaluierungsserver, um an andere Benutzer über ein Videoportal verteilt zu werden.

8. Der Evaluierungsserver nach einem der vorhergehenden Ansprüche, aufweisend:

Ein Erkennungsmodul zum automatischen erkennen derjenigen Videos, die dasselbe Ereignis oder dieselbe Szene aufnehmen;
ein Modul zum Guppieren der Mehrzahl von Videos gemäß den jeweiligen Szenen oder Ereignissen, die sie aufnehmen;
ein Modul zum Ausführen der priorisierten Verarbeitung separat für jede Gruppe von Videos.

9. Der Evaluierungsserver nach einem der vorhergehenden Ansprüche, aufweisend:

ein Klassifizierungsmodul, das Informationen darüber speichert, wie bestimmte automatisch erhaltene Kontextinformationen oder semantische Informationen in einen bestimmten numerischen szenenbasierten Relevanzparameter übersetzt werden sollen, das die Kontextinformationen erhält und auf die gespeicherten Informationen Bezug nimmt, um den szenenbasierten Relevanzparameter zu erhalten.

10. Der Evaluierungsserver nach einem der vorhergehenden Ansprüche, wobei das Klassifizierungsmodul eines oder mehrere von folgendem speichert:

wie ein bestimmter Ort in einen bestimmten szenenbasierten Relevanzparameter übersetzt werden soll;
wie eine bestimmte Entfernung von dem aufgenommenen Ereignis in einen bestimmten szenenbasierten Relevanzparameter übersetzt werden soll;
wie ein bestimmter Sichtwinkel des aufgenommenen Ereignisses in einen bestimmten szenenbasierten Relevanzparameter übersetzt werden soll;
wie eine bestimmte Helligkeit des aufgenommenen Ereignisses in einen bestimmten szenenbasierten Relevanzparameter übersetzt werden soll.

11. Ein Verfahren zum Evaluieren einer Mehrzahl von Videos, wobei das Verfahren aufweist:

Identifizieren unter einer Mehrzahl von Videos derjenigen Videos, welche das gleiche Ereignis aufnehmen, durch Ermitteln, ob das Video von einem Ort aufgenommen wurde, der an oder innerhalb eines bestimmten geographischen Bereichs liegt und durch Ermitteln, ob das Video zu einer oder innerhalb einer bestimmten Zeit aufgenommen wurde;
automatisches Erhalten von einem oder mehreren szenenbasierten Relevanzparametern für jedes Video, wobei jeder szenenbasierte Relevanzparameter durch einen numerischen Wert die Relevanz des semantischen Inhalts des Videos für einen Benutzer auf einer Skala ausdrückt, die von einem minimalen Relevanzparameterwert bis zu einem maximalen Relevanzparameterwert (A, B, C) reicht;

Erhalten eines Prioritätswerts für jedes der Videos basierend auf dem einen oder mehreren Relevanzparameterwerten, wobei der Prioritätswert für jedes der Videos die Priorität ausdrückt, mit der eine bestimmte Verarbeitung für jedes der Videos ausgeführt werden soll, wobei die Verarbeitung aufweist:

Zuweisen einer Netzwerkressource (wie etwa der Bandbreite) zu jedem der Videos zum Hochladen jedes der Videos zu einem Server in Übereinstimmung mit den Prioritätswerten, die den Videos zugewiesen wurden;

wobei das Verfahren ferner aufweist:

Empfangen der Mehrzahl von Videos in Echtzeit;
wiederholtes Erhalten der szenenbasierten Relevanzparameter (A, B, C), um upgedatete Prioritätswerte der Videos zu erhalten;
erneutes Anordnen der Priorität der Verarbeitung basierend auf den upgedateten Prioritätswerten; wobei das Verfahren ferner aufweist das Priorisieren der Videos gemäß den Prioritätswerten zum Zuweisen von Netzwerkressourcen und Zuweisung der die Ressourcen basierend auf den berechneten Prioritätswerten unter Verwendung der folgenden Schritte:

Berechnen, für jedes Video, einer gewichteten Summe der Relevanzparameter (A, B, C), um dadurch den Prioritätswert für jedes der Videos zu erhalten, wobei die Relevanzparameter (A, B, C) einen oder mehrere Relevanzparameter einschließen, die basieren auf gemessenen Informationen, die gemessen werden durch einen Sensor eines mobilen Geräts, wie etwa die Entfernung von dem Ereignis oder der Sichtwinkel, und ferner einen oder mehrere szenenbasierte Relevanzparameter, die basieren auf dem Videoinhalt selbst, wie etwa Qualitätsindikatoren wie PSNR, Auflösung oder Helligkeit;
Zuweisen von Bandbreite zu demjenigen Video, das den maximalen Prioritätswert hat und dem noch keine Bandbreite zugewiesen wurde; und Wiederholen des Zuweisungsschritts bis alle Bandbreite, die zugewiesen werden kann, der Mehrzahl von Videos zugewiesen wurde.

**12.** Das Verfahren nach Anspruch 11, wobei
die Videos gemäß den Prioritätswerten in einem Videoportal priorisiert werden, und die Prioritätswerte basierend auf folgendem berechnet werden:

Berechnen, für jedes Video, einer gewichteten Summe der Relevanzparameter, um dadurch den Prioritätswert für jedes der Videos zu erhalten, wobei die Relevanzparameter einen oder mehrere Relevanzparameter einschließen, die basieren auf gemessenen Informationen, die gemessen werden durch einen Sensor eines mobilen Geräts, wie etwa die Entfernung von dem Ereignis oder der Sichtwinkel, und ferner einen oder mehrere szenenbasierte Relevanzparameter, die basieren auf dem Videoinhalt selbst, wie etwa Qualitätsindikatoren wie PSNR, Auflösung oder Helligkeit;
Priorisieren der Mehrzahl von Videos in dem Videoportal gemäß den berechneten Prioritätswerten, so dass ein Video mit einem höheren Prioritätswert höher priorisiert wird als ein Video mit einem niedrigeren Prioritätswert.

**13.** Ein Computerprogramm aufweisend Computerprogrammcode, der wenn er durch einen Computer ausgeführt wird, den Computer in die Lage versetzt, ein Verfahren gemäß einem der Ansprüche 11-12 auszuführen.

## Revendications

**1.** Serveur d'évaluation permettant d'évaluer une pluralité de vidéos, ledit serveur d'évaluation comprenant :

un module pour identifier, parmi une pluralité de vidéos, les vidéos qui capturent le même événement en déterminant si la vidéo a été prise depuis un emplacement se trouvant au niveau de ou dans une certaine zone géographique et en déterminant si la vidéo a été prise à ou dans un certain temps ;
un module pour obtenir automatiquement, pour les vidéos qui ont été identifiées comme étant prises du même événement, un ou plusieurs paramètres de pertinence basés sur la scène, chaque paramètre de pertinence basé sur la scène exprimant par une valeur numérique la pertinence du contenu sémantique de la vidéo pour un utilisateur sur une échelle allant d'une valeur de paramètre de pertinence minimale à une valeur de paramètre de pertinence maximale (A, B, C) ;
un module pour obtenir pour les vidéos qui ont été identifiées comme étant prises du même événement une valeur de priorité basée sur lesdites une ou plusieurs valeurs de paramètre de pertinence, ladite valeur de priorité exprimant pour lesdites vidéos qui ont été identifiées comme étant prises du même événement la priorité selon laquelle un certain traitement doit être réalisé pour chacune desdites vidéos, dans lequel ledit traitement comprend :

allouer une ressource réseau telle qu'une largeur de bande à chacune desdites vidéos en conformité avec les valeurs de priorité attribuées auxdites vidéos afin de télécharger chacune desdites vidéos vers un serveur ;
ledit serveur d'évaluation comprenant en outre :

un module pour recevoir ladite pluralité de vidéos en temps réel ;
un module pour obtenir de façon répétée lesdits paramètres de pertinence basés sur la scène (A, B, C) afin d'obtenir des valeurs de priorité mises à jour desdites vidéos ;
un module pour réorganiser la priorité dudit traitement en se basant sur les valeurs de priorité mises à jour ;
dans lequel lesdites vidéos sont classées par ordre de priorité selon lesdites valeurs de priorité afin d'allouer les ressources réseau et ladite allocation de ressources basée sur lesdites valeurs de priorité calculées est réalisée en utilisant les étapes suivantes :

calculer pour chaque vidéo une somme pondérée desdits paramètres de pertinence (A, B, C) afin d'obtenir ainsi la valeur de priorité pour chacune desdites vidéos, où les paramètres de pertinence (A, B, C) comprennent un ou plusieurs paramètres de pertinence basés sur des informations détectées qui sont détectées par un détecteur d'un dispositif mobile telles que la distance par rapport à l'événement ou l'angle de prise de vue, et en outre un ou plusieurs paramètres de pertinence basés sur la scène qui sont basés sur le contenu vidéo lui-même tel que des indicateurs de qualité comme le PSNR, la résolution ou la luminosité ;
allouer une largeur de bande à la vidéo qui a la valeur de priorité maximale et à laquelle aucune largeur de bande n'a encore été attribuée ; et
répéter de ladite étape d'allocation jusqu'à ce que toute la largeur de bande qui peut être allouée ait été attribuée à ladite pluralité de vidéos.

2.  Serveur d'évaluation selon la revendication 1, dans lequel
    lesdites vidéos sont classées par ordre de priorité selon lesdites valeurs de priorité dans un portail vidéo, et lesdites valeurs de priorité sont calculées en se basant sur les étapes suivantes :

calculer pour chaque vidéo une somme pondérée desdits paramètres de pertinence afin d'obtenir ainsi la valeur de priorité pour chacune desdites vidéos, où les paramètres de pertinence comprennent un ou plusieurs paramètres de pertinence basés sur des informations détectées qui sont détectées par un capteur d'un dispositif mobile telles que la distance par rapport à l'événement ou l'angle de prise de vue, et en outre un ou plusieurs paramètres de pertinence basés sur la scène qui sont basés sur le contenu vidéo lui-même tels que des indicateurs de qualité comme le PSNR, la résolution ou la luminosité ;
classer par ordre de priorité la pluralité de vidéos dans ledit portail vidéo selon les valeurs de priorité calculées de sorte qu'une vidéo ayant une valeur de priorité supérieure est classée par ordre de priorité plus haut qu'une vidéo ayant une valeur de priorité inférieure.

3.  Serveur d'évaluation selon l'une des revendications précédentes, dans lequel
    lesdits un ou plusieurs paramètres de pertinence basés sur la scène sont obtenus en se basant sur un ou plusieurs des éléments suivants :

des informations de contexte qui sont détectés par un ou plusieurs capteurs appropriés d'un dispositif mobile d'un utilisateur avec lequel la vidéo est enregistrée, lesdites informations de contexte étant transmises conjointement avec ladite vidéo audit serveur d'évaluation, où lesdites informations de contexte comprennent un ou plusieurs des éléments suivants :

le temps auquel ladite vidéo est enregistrée ;
les informations d'emplacement auquel ladite vidéo est enregistrée ;
l'emplacement bidimensionnel ou tridimensionnel et/ou l'inclinaison du dispositif mobile qui enregistre ladite vidéo.

4. Serveur d'évaluation selon l'une des revendications précédentes, comprenant en outre :

   un module pour calculer, en se basant sur la pluralité de paramètres de pertinence basés sur la scène obtenus pour chacune de ladite pluralité de vidéos, un paramètre de pertinence basé sur la scène combiné en tant que valeur de priorité pour chacune desdites vidéos ;
   un module pour réaliser ledit traitement en conformité avec lesdites valeurs de priorité combinées.

5. Serveur d'évaluation selon l'une des revendications précédentes, dans lequel
   lesdits un ou plusieurs paramètres de pertinence basés sur la scène sont obtenus en se basant sur des informations de contexte qui expriment le contexte géographique ou sémantique de ladite vidéo.

6. Serveur d'évaluation selon l'une des revendications précédentes, dans lequel ledit paramètre de pertinence basé sur la scène reflète un ou plusieurs des éléments suivants :

   l'angle de prise de vue de la scène ;
   la distance à laquelle la scène a été enregistrée par la caméra ;
   la taille d'un ou plusieurs visages enregistrés sur la vidéo ;
   la luminosité de la vidéo ;
   la résolution ;
   le PSNR ;
   la popularité de la vidéo.

7. Serveur d'évaluation selon l'une des revendications précédentes, dans lequel ladite pluralité de vidéos générées enregistre le même événement ou la même scène par les dispositifs mobiles par une pluralité d'utilisateurs et lesdites vidéos sont téléchargées par lesdits utilisateurs vers ledit serveur d'évaluation afin d'être distribuées à d'autres utilisateurs via un portail vidéo.

8. Serveur d'évaluation selon l'une des revendications précédentes, comprenant :

   un module de reconnaissance pour reconnaître automatiquement les vidéos qui enregistrent le même événement ou la même scène ;
   un module pour grouper ladite pluralité de vidéos selon les scènes ou événements respectifs qu'elles enregistrent ;
   un module pour réaliser ledit traitement de classement par ordre de priorité séparément pour chaque groupe de vidéos.

9. Serveur d'évaluation selon l'une des revendications précédentes, comprenant :

   un module de classification qui stocke des informations à propos de la façon dont certaines informations de contexte ou informations sémantiques obtenues automatiquement doivent être translatées en un certain paramètre de pertinence numérique basé sur la scène, obtient lesdites informations de contexte et consulte lesdites informations stockées afin d'obtenir ledit paramètre de pertinence basé sur la scène.

10. Serveur d'évaluation selon l'une des revendications précédentes, dans lequel ledit module de classification stocke un ou plusieurs des éléments suivants :

    la façon de translater un certain emplacement en un certain paramètre de pertinence basé sur la scène ;
    la façon de translater une certaine distance par rapport à l'événement enregistré en un certain paramètre de pertinence basé sur la scène ;
    la façon de translater un certain angle de prise de vue de l'événement enregistré en un certain paramètre de pertinence basé sur la scène ;
    la façon de translater une certaine luminosité de l'événement enregistré en un certain paramètre de pertinence basé sur la scène.

11. Procédé d'évaluation d'une pluralité de vidéos, ledit procédé comprenant :

    identifier parmi une pluralité de vidéos les vidéos qui capturent le même événement en déterminant si la vidéo a été prise depuis un emplacement se trouvant au niveau de ou dans une certaine zone géographique et en déterminant si la vidéo a été prise à ou dans un certain temps ;
obtenir automatiquement pour chaque vidéo un ou plusieurs paramètres de pertinence basés sur la scène, chaque paramètre de pertinence basé sur la scène exprimant par une valeur numérique la pertinence du contenu sémantique de la vidéo pour un utilisateur sur une échelle allant d'une valeur de paramètre de pertinence minimale à une valeur de paramètre de pertinence maximale (A, B, C) ;
obtenir pour chacune de ladite pluralité de vidéos une valeur de priorité basée sur lesdites une ou plusieurs valeurs de paramètre de pertinence, ladite valeur de priorité exprimant pour chacune de ladite pluralité de vidéos la priorité selon laquelle un certain traitement doit être réalisé pour chacune desdites vidéos, dans lequel ledit traitement comprend :

allouer une ressource réseau (telle qu'une largeur de bande) à chacune desdites vidéos afin de télécharger chacune desdites vidéos en conformité avec les valeurs de priorité attribuées auxdites vidéos vers un serveur ;
dans lequel ledit procédé comprend en outre :

recevoir ladite pluralité de vidéos en temps réel ;
obtenir de façon répétée lesdits paramètres de pertinence basés sur la scène (A, B, C) afin d'obtenir des valeurs de priorité mises à jour desdites vidéos ;
réorganiser la priorité dudit traitement en se basant sur les valeurs de priorité mises à jour ;
dans lequel ledit procédé comprend en outre le classement par ordre de priorité desdites vidéos selon lesdites valeurs de priorité afin d'allouer des ressources réseau et d'allouer des ressources basées sur lesdites valeurs de priorité calculées en utilisant les étapes suivantes :

calculer pour chaque vidéo une somme pondérée desdits paramètres de pertinence (A, B, C) afin d'obtenir ainsi la valeur de priorité pour chacune desdites vidéos, où les paramètres de pertinence (A, B, C) comprennent un ou plusieurs paramètres de pertinence basés sur des informations détectées qui sont détectées par un détecteur d'un dispositif mobile telles que la distance par rapport à l'événement ou l'angle de prise de vue, et en outre un ou plusieurs paramètres de pertinence basés sur la scène qui sont basés sur le contenu vidéo lui-même tels que des indicateurs de qualité comme le PSNR, la résolution ou la luminosité ;
allouer une largeur de bande à la vidéo qui a la valeur de priorité maximale et à laquelle aucune largeur de bande n'a encore été attribuée ; et
répéter ladite étape d'allocation jusqu'à ce que toute la largeur de bande qui peut être allouée ait été attribuée à ladite pluralité de vidéos.

12. Procédé selon la revendication 11, dans lequel
lesdites vidéos sont classées par ordre de priorité selon lesdites valeurs de priorité dans un portail vidéo, et lesdites valeurs de priorité sont calculées en se basant sur les étapes suivantes :

calculer pour chaque vidéo une somme pondérée desdits paramètres de pertinence afin d'obtenir ainsi la valeur de priorité pour chacune desdites vidéos, où les paramètres de pertinence comprennent un ou plusieurs paramètres de pertinence basés sur des informations détectées qui sont détectées par un capteur d'un dispositif mobile telles que la distance par rapport à l'événement ou l'angle de prise de vue, et en outre une ou plusieurs informations de pertinence basées sur la scène telles que des indicateurs de qualité comme le PSNR, la résolution ou la luminosité ;
classer par ordre de priorité la pluralité de vidéos dans ledit portail vidéo selon les valeurs de priorité calculées de sorte qu'une vidéo ayant une valeur de priorité supérieure est classée par ordre de priorité plus haut qu'une vidéo ayant une valeur de priorité inférieure.

13. Programme informatique comprenant un code de programme informatique qui, lorsqu'il est exécuté sur un ordinateur, permet audit ordinateur de réaliser un procédé selon l'une des revendications 11 à 12.

Video producers

10 (A), 10 (B), 10 (C)  ①

8 (A), 7 (B), 9 (C)  ②

10 (A), 10 (B), 8 (C)  ③

8 (A), 10 (B), 6 (C)  ④

CN

P-GW S-GW

Optimization Module

P-GW S-GW

Video Portal/Server

Video Consumer

Video Consumer

EP 2 479 684 B1

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5675576 A
- US 2009087161 A1
- US 2009148124 A1
- WO 2006103151 A1

### Non-patent literature cited in the description

- **S. KHAN ; S. DUHOVNIKOV ; E. STEINBACH ; W. KELLERER.** MOS-based multiuser multiapplication cross-layer optimization for mobile multimedia communication. *Advances in Multimedia,* 2007
- **B. RADUNOVIC ; J. Y. LE BOUDEC.** A unified framework for maxmin and min-max fairness with applications. *IEEE/ACM Trans. on Networking,* October 2007, vol. 15 (5), 1073-1083
- **J. HUANG ; V. G. SUBRAMANIAN ; R. AGRAWAL ; R. BERRY.** Joint scheduling and resource allocation in uplink OFDM systems for broadband wireless access network. *IEEE journal on selected areas in Communications,* February 2009, vol. 27 (2
- Objective perceptual video quality measurement techniques for digital cable television in the presence of a full reference. *ITU-T Recommendation J.144,* March 2004
- **Z. WANG ; L. LU ; A. C. BOVIK.** Video Quality Assessment Based on Structural Distortion Measurement. *IEEE Signal Processing: Image Communication,* February 2004, vol. 19 (1), 121-132
- **T. C. THANG ; Y. J. JUNG ; M. M. RO.** Semantic quality for content-aware video adaptation. *Proc. IEEE Workshop on Multimedia Signal Processing,* October 2005, 41-44